# FASCICULE DE BREVET EUROPEEN

(11) **EP 0 816 262 B1**
(45) Date de publication et mention de la délivrance du brevet: **06.04.2005**
(21) Numéro de dépôt: 97401573.7
(22) Date de dépôt: 03.07.1997
(51) Int. Cl.: B65G 45/08, B65G 17/38, B65G 39/09, F16G 13/06

(54) **Convoyeur pour le transport de pièces métalliques dans une étuve**
Förderer zum Transportieren von metallischen Teilen in einem Ofen
Coneyor for transporting metallic parts in a kiln

(30) Priorité: 04.07.1996 FR 9608330
(43) Date de publication de la demande: 07.01.1998
(73) Titulaire: Renault s.a.s., 92100 Boulogne Billancourt (FR)
(72) Inventeur: Robillard, Jean, 94370 Sucy-en-Brie (FR)

(56) Documents cités:
- EP-A- 0 397 503
- DE-A- 3 933 403
- GB-A- 998 418
- GB-A- 1 017 764
- GB-A- 2 118 270
- GB-A- 2 246 402

## Description

La présente invention se rapporte aux convoyeurs pour le transport de pièces métalliques dans les étuves des installations de traitement de surface et vise plus particulièrement la lubrification des chaînes d'entraînement de ces convoyeurs.

Classiquement, les convoyeurs de pièces métalliques utilisés dans les étuves des installations de traitement de surface comportent une chaîne d'entraînement de type classique, lubrifiée avec une huile étudiée pour les conditions d'utilisation particulières des étuves où la température s'élève à plus de 200°C.

Toutefois, les vapeurs d'huile dégagées par le système de lubrification de la chaîne d'entraînement présentent l'inconvénient de venir réagir de manière physico-chimique avec le revêtement déposé sur la surface des pièces traitées et d'entraîner alors une détérioration de ce dernier.

L'altération du revêtement provoquée par les émissions de vapeur d'huile sur la surface des pièces traitées est particulièrement pénalisante lorsque le traitement de surface contribue à la protection ou à l'aspect de la pièce tel qu'un traitement de surface par cataphorèse ou le dépôt d'une couche de peinture.

Il est connu pour remédier à ces inconvénients de rechercher des huiles de lubrification spécifiques dont la composition chimique est compatible avec les produits appliqués sur les pièces tels que les produits des bains de cataphorèse, la peinture ou les mastics.

Toutefois, le prix de ces huiles est très élevé et ces dernières ne permettent pas de supprimer totalement les risques d'altérations du revêtement telles que les formations de cratères qui réduisent la protection fournie par le traitement de surface et génèrent des défauts d'aspect pouvant conduire à la mise au rebut ou à la retouche des pièces. Ce problème est particulièrement important pour le traitement des carrosseries automobiles où les exigences sur l'aspect et la protection contre la corrosion sont très sévères.

Le but de la présente invention est donc de proposer un convoyeur, pour le transport de pièces métalliques à l'intérieur d'une étuve, comportant une chaîne d'entraînement dont la lubrification n'engendre pas d'altérations du revêtement des pièces et qui soit simple et économique à réaliser.

L'invention a pour objet un convoyeur pour le transport de pièces métalliques telles que des carrosseries de véhicules automobiles à l'intérieur d'une étuve, comportant une chaîne d entraînement comprenant des éléments en polymères fluorés armés tels qu'un PTFE. Un tel convoyeur est connu du document DE-3 933 403.

Selon l'invention, le convoyeur pour le transport de pièces métalliques est caractérisé en ce que les éléments sont en polymères fluorés armés de trames inox tissées.

Selon une autre caractéristique du convoyeur de pièces métalliques objet de l'invention, la chaîne comprend des éléments ayant subi un traitement de surface de type NIFLOR, c'est à dire incorporant des particules de PTFE dans une matrice à base de nickel et de phosphore.

Selon une autre caractéristique du convoyeur de pièces métalliques objet de l'invention, la chaîne est constituée alternativement de maillons extérieurs et intérieurs articulés entre eux et séparés par des rondelles, les maillons extérieurs étant constitués de plaques réunies entre elles au moyen d'un axe et les maillons intérieurs étant constitués de plaques emprisonnées entre les plaques des maillons extérieurs et solidaires de douilles comportant un coussinet à travers lequel passe l'axe, le coussinet et les rondelles étant réalisés en polymères fluorés armés.

Selon une autre caractéristique du convoyeur de pièces métalliques objet de l'invention, l'axe se prolonge de part et d'autre des maillons extérieurs et comporte à chaque extrémité un galet comportant un coussinet en polymères fluorés armés à travers lequel passe l'axe et destiné à reposer sur un rail de guidage du convoyeur, les galets étant emprisonnés entre une rondelle en polymères fluorés armés en appui sur les maillons extérieurs et une bague d'arrêt montée en bout d'axe dont la surface de contact a subi un traitement de surface de type NIFLOR.

Selon une autre caractéristique du convoyeur de pièces métalliques objet de l'invention, l'étuve comportant le convoyeur appartient à une installation de traitement de surface par cataphorèse de carrosseries automobiles.

Selon une autre caractéristique du convoyeur de pièces métalliques objet de l'invention, l'étuve comportant le convoyeur appartient à une installation de peinture de carrosseries automobiles.

On comprendra mieux les buts, aspects et avantages de la présente invention, d'après la description donnée ci-après de différents modes de réalisation de l'invention, présentés à titre d'exemples non limitatifs, en se référant aux dessins annexés, dans lesquels :
- la figure 1 est une vue longitudinale schématique d'une étuve comportant un convoyeur selon un mode particulier de réalisation de l'invention;
- la figure 2 est une vue en coupe schématique de l'étuve représentée à la figure 1;
- la figure 3 est une section partielle de la jonction de deux maillons de chaîne d'entraînement du convoyeur représenté aux figures 1 et 2.

Pour faciliter la lecture des dessins, les mêmes pièces portent les mêmes références d'une figure à l'autre. Par ailleurs, seuls les éléments nécessaires à la compréhension de l'invention ont été figurés.

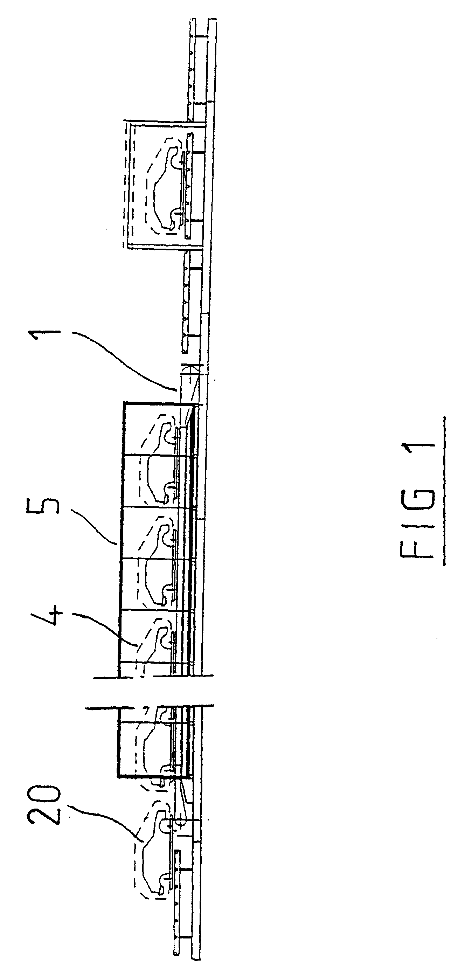

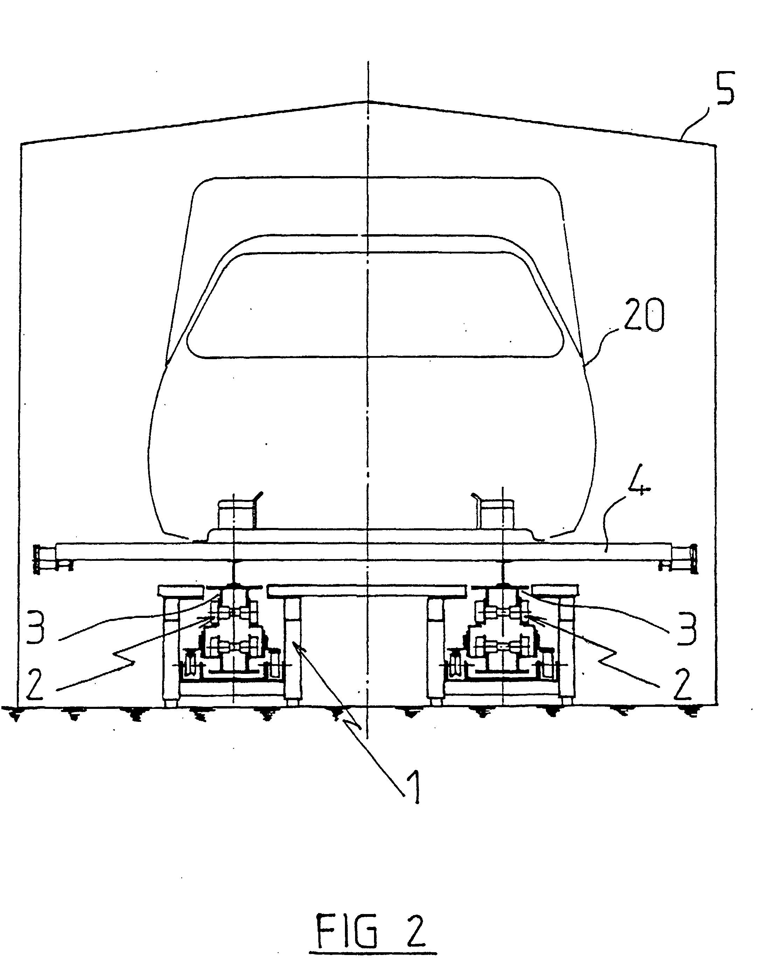

Les figures 1 et 2 présentent un mode particulier de réalisation d'un convoyeur 1 pour le transport de carrosseries de véhicules automobiles 20 dans une étuve 5 disposée en aval d'un bain de cataphorèse et dont la température peut s'élever au delà de 200°C.

Ce convoyeur 1 comporte deux chaînes d'entraînement 2 s'étendant parallèlement sur toute sa longueur, chaque chaîne d'entraînement 2 formant une boucle fermée permettant son mouvement continu.

Les deux chaînes d'entraînement 2 sont disposées de part et d'autre du plan de symétrie longitudinal des carrosseries de véhicules automobiles 20 de façon à ce que les portions supérieures des boucles formées par les chaînes d'entraînement 2, reposant sur des rails de guidage par l'intermédiaire de galets, supportent de façon stable, à l'aide de pontets 3, des plates-formes 4 sur lesquelles reposent les carrosseries de véhicules automobiles 20.

Le convoyeur 1 comporte également des moteurs électriques, non représentés sur les figures, permettant la mise en mouvement des chaînes d'entraînement 2 à une vitesse ajustée pour l'obtention du temps de cuisson souhaité.

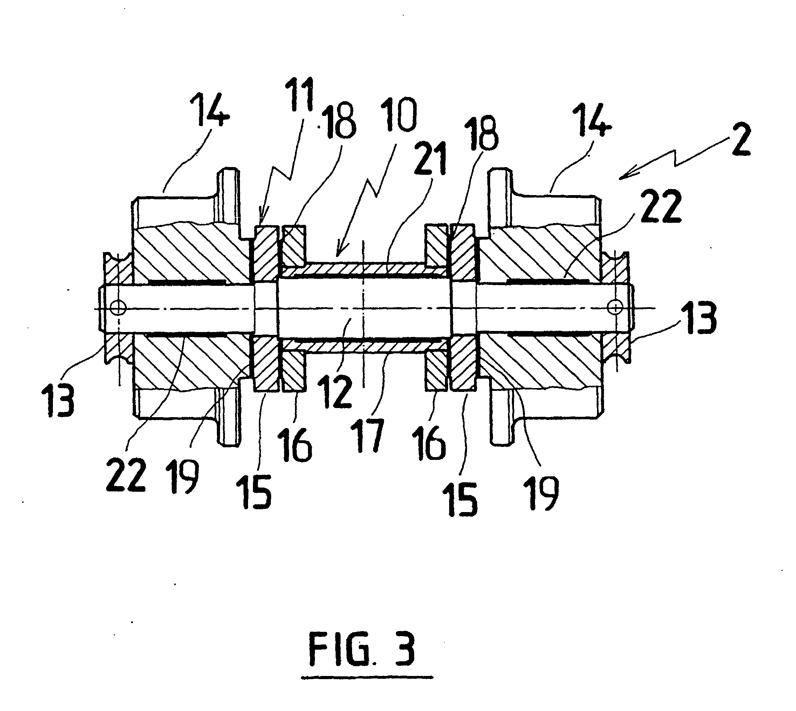

En se reportant à la figure 3, on voit de façon détaillée une des chaînes d'entraînement 2 du convoyeur 1. Cette chaîne d'entraînement 2 représentée comporte un maillon intérieur 10, un maillon extérieur 11, un axe 12 avec deux bagues d'arrêt 13 et deux galets 14 destinés à reposer sur deux rails de guidage non figurés.

Chaque maillon extérieur 11 de la chaîne d'entraînement 2 comporte deux plaques 15 maintenues écartées et parallèles entre elles par l'axe 12, en acier inox, dont un épaulement est emmanché à la presse dans les plaques 15.

Chaque maillon intérieur 10 de la chaîne d'entraînement 2 comporte deux plaques 16 maintenues écartées et parallèles entre elles par une douille 17 montée à rotation sur l'axe 12 et dont un épaulement est emmanché dans les plaques 16.

Les maillons intérieurs 10 comportent également un coussinet 21, en polymère fluoré armé, rapporté à l'intérieur de la douille 17 et permettant de réduire les frottements entre le maillon intérieur 10 et l'axe 12.

Les plaques 15 du maillon extérieur 11 et les plaques 16 du maillon intérieur 10 disposées côte à côte sont séparées par une rondelle 18 réalisée dans un polymère fluoré armé limitant les forces de frottement tel qu'un PTFE armé d'une trame inox tissée.

Les galets 14, disposés de part et d'autre du maillon extérieur 11 et séparés de ce dernier par une rondelle 19 du même type que la rondelle 18 précédemment décrite, sont montés à rotation autour de l'axe 12 et maintenus en translation par deux bagues d'arrêt 13 disposées en bout de l'axe 12 et immobilisées par une goupille. Afin de réduire les frottements entre les galets 14 et l'axe 12, des coussinets 22 en polymère fluoré armé sont rapportés à l'intérieur de l'alésage recevant l'axe 12.

Pour réduire les frottements entre les galets 14 et les bagues d'arrêt 13, les surfaces de contact des bagues d'arrêt 13 reçoivent un traitement de surface de type NIFLOR.

La chaîne d'entraînement 2 ainsi réalisée et utilisée sur le convoyeur 1 des figures 1 et 2 peut, grâce à l'incorporation de lubrifiant solide sous forme de pièces rapportées ou de revêtement à base de polymères fluorés, fonctionner pour des températures supérieures à 200°C sans engendrer les dégagements de vapeurs d'huile habituellement liés à la lubrification des chaînes. En effet, ces pièces ou revêtement à base de polymères fluorés restent solides aux températures de fonctionnement de l'étuve ce qui permet d'éviter toute émission de lubrifiant à l'extérieur de la chaîne d'entraînement 2.

Le convoyeur pour le transport de pièces métalliques à l'intérieur d'une étuve selon l'invention permet donc, par l'application de lubrifiant sous forme solide, de supprimer les altérations du revêtement liées au dépôt de vapeurs d'huile sur les pièces lors de la cuisson et d'augmenter considérablement la qualité du traitement de surface des pièces traitées. Cette amélioration de la qualité du traitement de surface s'accompagne d'une baisse du nombre de pièces présentant des défauts et donc d'une baisse des coûts de retouche de ces dernières.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, les pièces telles que les coussinets ou bagues réalisés à base de polymères fluorés peuvent être réalisés à base de tout autre lubrifiant solide adapté aux températures de fonctionnement.

Ainsi, on peut remplacer les coussinets ou bagues rapportés par le dépôt d'un revêtement adapté sur les pièces de frottement et les traitements de surface des zones de frottement par des pièces distinctes à base de lubrifiant solide. Par exemple, dans le mode de réalisation présenté, le traitement de surface de type NIFLOR des bagues d'arrêt 13 peut être supprimé en insérant des rondelles en polymère fluoré armé entre les galets 14 et les bagues d'arrêts 13.

Ainsi, le convoyeur de transport de pièces métalliques selon l'invention peut être avantageusement utilisé dans une étuve pour la cuisson de peinture ou dans toutes autres étuves pour les installations de traitement de surface nécessitant la cuisson à une température suffisamment élevée pour que les systèmes de lubrification classique engendre des dépôts de vapeurs d'huile sur les pièces.

## Revendications

1. Convoyeur (1) pour le transport de pièces métalliques (20), telles que des carrosseries de véhicules automobiles (20), à l'intérieur d'une étuve (5), comportant une chaîne d'entraînement (2) comprenant des éléments (18, 19, 21) en polymères fluorés armés tels qu'un PTFE, **caractérisé en ce que** le polymère fluoré est armé de trames inox tissées.

2. Convoyeur (1) pour le transport de pièces métalliques (20) à l'intérieur d'une étuve (5) selon la revendication 1, **caractérisé en ce que** ladite chaîne d'entraînement (2) comprend des éléments (13) ayant subi un traitement de surface de type NIFLOR, c'est à dire incorporant des particules de PTFE dans une matrice à base de nickel et de phosphore.

3. Convoyeur (1) pour le transport de pièces métalliques (20) à l'intérieur d'une étuve (5) selon la revendication 1, **caractérisé en ce que** ladite chaîne d'entraînement (2) est constituée alternativement de maillons intérieurs (10) et extérieurs (11) articulés entre eux et séparés par des rondelles (18), les maillons extérieurs (11) étant constitués de plaques (15) réunies entre elles au moyen d'un axe (12) et les maillons intérieurs (10) étant constitués de plaques (16) emprisonnées entre les plaques (15) et solidaire de douilles (17) comportant un coussinet (21) à travers lequel passe ledit axe (12), ledit coussinet (21) et lesdites rondelles (18) étant réalisés en polymères fluorés armés.

4. Convoyeur (1) pour le transport de pièces métalliques (20) à l'intérieur d'une étuve (5) selon les revendications 2 et 3, **caractérisé en ce que** l'axe (12) se prolonge de part et d'autre des maillons extérieurs (11) et comporte à chaque extrémité un galet (14) comportant un coussinet (22) en polymères fluorés armés à travers lequel passe ledit axe (12) et destiné à reposer sur un rail de guidage du convoyeur, lesdits galets (14) étant emprisonnés entre une rondelle (19) en polymères fluorés armés en appui sur les maillons extérieurs et une bague d'arrêt (13) montée en bout de l'axe (12) dont la surface de contact a subi un traitement de surface de type NIFLOR.

5. Convoyeur (1) pour le transport de pièces métalliques (20) à l'intérieur d'une étuve (5) selon l'une quelconque des revendications 1 à 4, **caractérisé en ce que** ladite étuve (5) appartient à une installation de traitement de surface par cataphorèse de carrosseries automobiles.

6. Convoyeur (1) pour le transport de pièces métalliques (20) à l'intérieur d'une étuve (5) coopérant avec une installation de traitement de surface selon l'une quelconque des revendications 1 à 4, **caractérisé en ce que** ladite étuve (5) appartient à une installation de peinture de carrosseries automobiles.

## Patentansprüche

1. Förderer (1) für den Transport von metallischen Teilen (20) wie z.B. Karosserien (20) für Kraftfahrzeuge im Inneren eines Ofens (5), mit einer Antriebskette (2), die Bauteile (18, 19, 21) aus verstärkten fluorhaltigen Polymeren wie z.B. PTFE aufweist, **dadurch gekennzeichnet, dass** das fluorhaltige Polymer durch Fäden aus eingewebtem Edelstahl verstärkt ist.

2. Förderer (1) für den Transport von metallischen Teilen (20) im Inneren eines Ofens (5) nach Anspruch 1, **dadurch gekennzeichnet, dass** die Antriebskette (2) Bauteile (13) aufweist, die einer Oberflächenbehandlung vom Typ NIFLOR unterzogen worden sind, d.h. dass sie Teilchen aus PTFE in einer Matrix auf Grundlage von Nickel und Phosphor aufweisen.

3. Förderer (1) für den Transport von metallischen Teilen (20) im Inneren eines Ofens (5) nach Anspruch 1, **dadurch gekennzeichnet, dass** die Antriebskette (2) abwechselnd aus inneren Kettengliedern (10) und äusseren Kettengliedern (11) besteht, die gelenkig miteinander verbunden sind und durch Scheiben (18) voneinander getrennt sind, wobei die äusseren Kettenglieder (11) aus Platten (15) bestehen, die miteinander über eine Achse (12) verbunden sind, während die inneren Kettenglieder (10) aus Platten (16) bestehen, die zwischen die Platten (15) eingesetzt sind und mit Hülsen (17) fest verbunden sind, die ein Lager (21) aufweisen, das von der Achse (12) durchsetzt wird, wobei das Lager (21) und die Scheiben (18) aus verstärkten fluorhaltigen Polymeren bestehen.

4. Förderer (1) für den Transport von metallischen Teilen (20) im Inneren eines Ofens (5) nach Ansprüchen 2 und 3, **dadurch gekennzeichnet, dass** die Achse (12) zu beiden Seiten der äusseren Kettenglieder (11) verlängert ist und an jedem Ende eine Rolle (14) aufweist mit einem Lager (22) aus verstärkten fluorhaltigen Polymeren, das von der Achse (12) durchsetzt wird und das sich auf sich auf einer Führungsschiene des Förderers abstützt, wobei die Rollen (14) zwischen einer Scheibe (19) aus verstärkten fluorhaltigen Polymeren, die sich auf den äusseren Kettengliedern (11) abstützt und einem Haltering (13) eingesetzt ist, der am Ende der Achse (12) angeordnet ist und dessen Kontaktfläche einer Oberflächenbehandlung vom Typ NIFLOR unterzogen worden ist.

5. Förderer (1) für den Transport von metallischen Teilen (20) im Inneren eines Ofens (5) nach einem der Ansprüche 1 bis 4, **dadurch gekennzeichnet, dass** der Ofen (5) zu einer Anlage zur Behandlung der Oberfläche mittels Kataphorese von Karosserien für Kraftfahrzeuge gehört.

6. Förderer (1) für den Transport von metallischen Teilen (20) im Inneren eines Ofens (5), der mit einer Anlage zur Behandlung der Oberfläche nach einem der Ansprüche 1 bis 4 zusammenwirkt, **dadurch gekennzeichnet, dass** der Ofen (5) zu einer Anlage zur Lackierung von Kraftfahrzeugkarosserien gehört.

## Claims

1. A conveyor (1) for transporting metal parts (20) such as motor vehicle bodies (20) within an oven (5) including a drive chain (2) comprising elements (18, 19, 21) of reinforced fluorinated polymers such as a PTFE, **characterised in that** the fluorinated polymer is reinforced with woven stainless steel wefts.

2. A conveyor (1) for transporting metal parts (20) within an oven (5) according to claim 1 **characterised in that** said drive chain (2) comprises elements (13) which have been subjected to a surface treatment of NIFLOR type, that is to say incorporating particles of PTFE in a nickel and phosphorus based matrix.

3. A conveyor (1) for transporting metal parts (20) within an oven (5) according to claim 1 **characterised in that** said drive chain (2) is formed alternatively by inner links (10) and outer links (11) which are pivotably connected to each other and separated by washers (18), the outer links (11) being formed by plates (15) which are connected together by means of a spindle (12) and the inner links (10) being formed by plates (16) trapped between the plates (15) and fixed with respect to sleeves (17) comprising a bearing (21) through which said spindle (12) passes, said bearing (21) and said washers (18) being made of reinforced fluorinated polymers.

4. A conveyor (1) for transporting metal parts (20) within an oven (5) according to claims 2 and 3 **characterised in that** the spindle (12) is extended on respective sides of the outer links (11) and comprises at each end a roller (14) comprising a bearing (21) of reinforced fluorinated polymers, through which bearing passes said spindle (12) and intended to rest on a guide rail of the conveyor, said rollers (14) being trapped between a washer (19) of reinforced fluorinated polymers bearing against the outer links and a stop ring (13) mounted at the end of the spindle (12), the contact surface of which has been subjected to a surface treatment of NIFLOR type.

5. A conveyor (1) for transporting metal parts (20) within an oven (5) according to any one of claims 1 to 4 **characterised in that** said oven (5) belongs to an installation for surface treatment by cataphoresis of motor vehicle bodies.

6. A conveyor (1) for transporting metal parts (20) within an oven (5) co-operating with a surface treatment installation according to any one of claims 1 to 4 **characterised in that** said oven (5) belongs to a motor vehicle body painting installation.
